# EUROPEAN PATENT SPECIFICATION

(11) **EP 2 905 396 B1**
(45) Date of publication and mention of the grant of the patent: **04.12.2019**
(21) Application number: 15153907.9
(22) Date of filing: 05.02.2015
(51) Int. Cl.: E04G 9/00, E04G 11/36, B28B 7/00, A47K 3/00, A47K 3/40, E04F 21/24, E04F 15/12, E01C 19/00, E03F 5/04, E04G 21/10

(54) **Method for providing a slope in a cast floor**
Verfahren zur Bereitstellung eines Gefälles in einem Gussboden
Procédé de fourniture d'une pente dans un sol coulé

(30) Priority: 06.02.2014 NL 2012216
(43) Date of publication of application: 12.08.2015
(73) Proprietor: Easy Sanitary Solutions B.V., 7575 BK Oldenzaal (NL)
(72) Inventor: KEIZERS, Jurgen Hendrik Peter Joseph, 7582 GH Losser (NL)
(74) Representative: 't Jong, Bastiaan Jacob

(56) References cited:
- DE-U1- 9 210 901
- US-A- 5 271 690
- US-B1- 6 951 435

## Description

The invention relates to a method for arranging a slope in a cast floor.

A base surface in a building, such as a rough concrete slab, is finished by means of a covering floor. Such a covering floor often consists of sand cement. The advantage of sand cement is that it is easy to shape, so that when the sand cement covering floor is arranged a slope can easily be formed in a floor. Such a slope is particularly desirable in spaces where water has to flow in the direction of a drainage point.

There is a trend toward using cast floors to finish rough sub-floors. The advantage of a cast floor is that the floor is largely self-levelling. Large surface areas can hereby be easily provided with a flat finishing layer in a single operation by a few workmen.

Another advantage of a cast floor is the high strength of a cast floor compared to the often more brittle sand cement covering floors. A cast floor is hereby highly suitable for arranging on an insulating layer. It is thus possible to provide an insulating layer on the rough base surface and to finish this layer with a cast floor while the overall thickness of the floor remains limited.

Cast floors normally consist of calcium sulphate, anhydrite, lime sand or even special mixtures of sand cement. Cast covering floors.

Because a cast floor is self-levelling and a slope cannot therefore be made therein, it is usual to demarcate the floor parts where a slope is desired, such as a shower space. The cast floor is then poured and, after the cast floor has cured, the demarcation is removed. A covering floor with slope is then finally provided in the demarcated part using conventional sand cement. This is labour-intensive however. In the course of time cracking will moreover occur at the transition between the cast floor and the sand cement floor.

Another option is to provide the whole bottom layer with a cast floor and then arrange a slope therein by means of milling. This produces a great deal of dust however, and extra workers are required to finish the floor. This latter is sometimes a problem from an organizational viewpoint.

It is now an object of the invention to provide a method wherein a slope can be provided in a cast floor on site.

This objective is achieved with a method according to the preamble, the method comprising the steps of:
- providing a mould with a shaped surface corresponding to the slope;
- pouring the cast floor on a base surface;
- arranging the mould before or after pouring of the cast floor; and
- removing the mould after curing of the cast floor.

A mould with a shaped surface is provided in the method according to the invention. This shaped surface ensures that the cast floor cannot level out at the position of the mould. The cast floor will be forced into a non-flat state by the shaped surface, whereby a slope can nevertheless be obtained despite the tendency of cast floors to self-levelling.

It is thus possible with this method to provide a slope in the cast floor on site. Removing the mould after curing of the cast floor means that the mould can be taken away as soon as the cast floor no longer has its self-levelling capacity and so remains in the imposed form. It may be that, following removal of the mould, the cast floor must cure still further before it is possible to walk on the cast floor.

In an embodiment according to the invention the mould is arranged by pressing the mould with the shaped surface into the poured and still liquid cast floor.

Arranging the mould after pouring ensures that sufficient cast floor is available at the location where the mould is arranged. De-aerating openings are optionally provided in the mould so that the air between the cast floor and the mould can escape.

The mould can be attached with legs to the base surface, wherein the legs remain behind following casting of the floor. The mould can also be attached to an adjacent wall, optionally via a hinge. In this latter case the mould can be pivoted onto the cast floor following casting of the floor, whereby possible air will be pressed out.

In another embodiment of the method according to the invention the shaped surface of the mould is provided with a number of grooves, and the method further comprises the step of breaking away the ribs formed by the grooves following removal of the mould.

Possible air captured between the mould and the cast floor can flow into the grooves. Cast floor will however also flow into these grooves. By keeping the grooves narrow the formed ribs will likewise be narrow, whereby they can be broken away easily. Although the floor part with the slope is not neatly finished after the ribs have been broken away, this will not normally be a problem because a tile layer will for instance also be glued thereon.

The shaped surface is preferably manufactured from a flexible plastic. Because the shaped surface is flexible, the mould can be released more easily from the cured cast floor.

In the method according to the invention the mould is provided with a coupling piece for coupling to a draining opening, such as a siphon, arranged on the base surface.

A draining opening will often already have been arranged on the base surface. This draining opening must be temporarily sealed in order to prevent cast floor flowing away via the draining opening. This can be prevented by inserting a cement cap in the draining opening. According to the invention the mould can also function as cement cap in that the mould is provided with a coupling piece with which the mould can be coupled to the draining opening.

The mould can optionally be provided on the upper side with a pouring opening through which cast floor can be poured from above into the mould. Particularly in the case of small surface areas or small spaces it can be advantageous to first place the mould and then pour the cast floor through the mould. The pouring outlet can then be easily broken away once the floor has cured.

These and other features of the invention are further elucidated with reference to the accompanying drawings.
Figures 1A and 1B show two steps of an exemplary method.
Figure 2 shows an embodiment of a mould for an exemplary method.
Figure 3 shows the invention.
Figure 4 shows an embodiment of a double mould.
Figure 5 shows an exemplary method.
Figures 6A and 6B show two steps of an exemplary method.

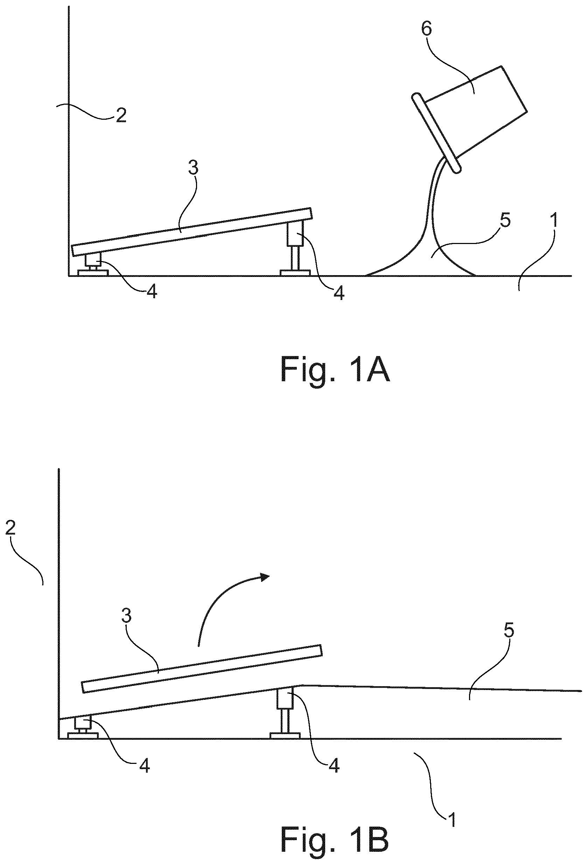

Figure 1A shows a step of an exemplary method.

A mould 3 is placed on a base surface 1 and against a wall 2. Mould 3 takes the form of a plate and is connected to base surface 1 via adjusting feet 4. Adjusting feet 4 make it possible to set plate 3 at the desired angle.

After setting of mould 3 the cast floor 5 can be poured onto base surface 1. Shown in this figure for pouring cast floor 5 is a bucket 6, although cast floor 5 can also be poured from for instance a larger reservoir and a hose onto base surface 1.

Cast floor 5 will spread over base surface 1 and flow under mould 3. Because mould 3 is connected via adjusting feet 4 to base surface 1, mould 3 will remain in position even when the level of cast floor 5 rises.

Once cast floor 5 has cured (see figure 1B), mould 3 can be released from adjusting feet 4 and removed. Adjusting feet 4 remain behind in cast floor 5. A slope will have been formed in cast floor 5 at the position of mould 3.

Cast floor 5 can then be finished with for instance a watertight layer and a tile layer arranged thereon.

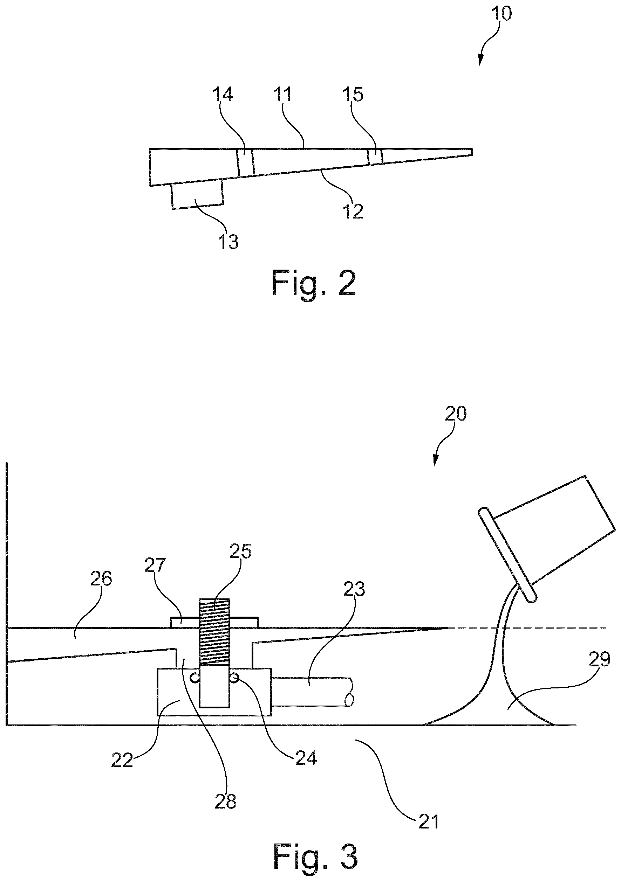

Figure 2 shows an exemplary mould 10. Mould 10 has a straight upper surface 11 and an inclining lower surface 12. The advantage of a flat upper surface 11 is that mould 10 can be placed level in simple manner and that this ensures that the inclining lower surface 12 lies at the correct angle. The flat upper surface 11 can further be easily used as reference for the cast floor.

Further arranged on lower side 12 is a protrusion 13 for the purpose of providing an additional recess in the cast floor, for instance for a drain in the case this has to be placed only after pouring of the cast floor.

Inspection channels 14, 15 are further provided in mould 10. Air possibly captured under mould 10 during casting of the floor can escape via these channels 14, 15. It is further possible via these channels 14, 15 to make a visual inspection of whether the cast floor has flowed sufficiently under mould 10.

Figure 3 shows the method of the invention. Placed on base surface 21 in this embodiment is a siphon 22 which is connected to an outlet pipe 23. Siphon 22 is provided with an inflow opening with an O-ring 24. An outflow of a drain is usually inserted into this inflow opening with O-ring 24.

In the method according to the invention however, a mounting tube 25 with screw thread is inserted into the O-ring. A mould 26 is then placed over mounting tube 25 and secured with a nut 27. A protrusion 28 is formed on the underside of mould 26 so that a recess, for instance for a shower drain, is created in the cast floor.

After a poured cast floor 29 has cured, nut 27 can be released, after which mould 26 can be removed and mounting tube 25 can be taken out. In the recess formed by protrusion 28 can then be placed a shower drain which connects with the outflow to O-ring 24 in the inflow opening.

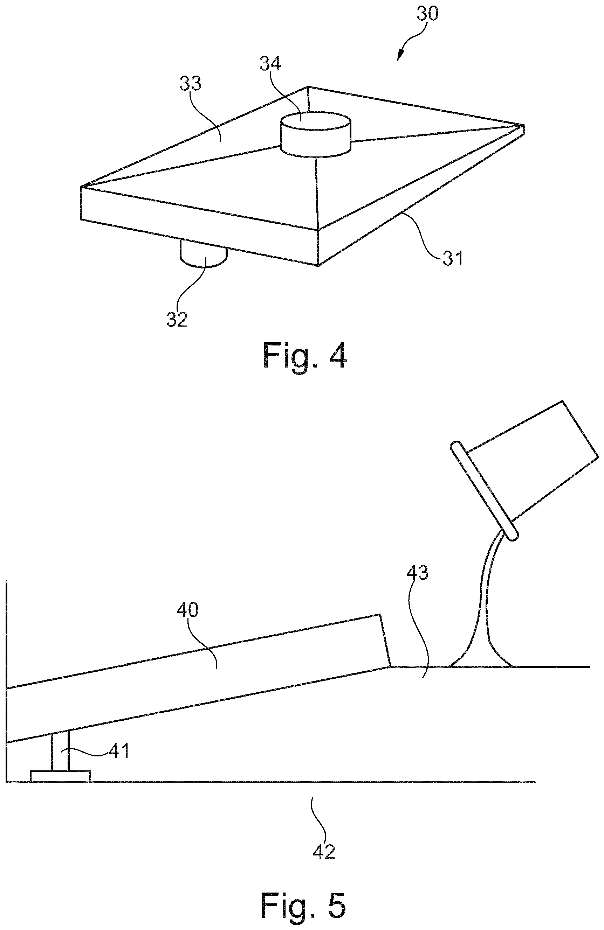

Figure 4 shows an embodiment of a double-sided mould 30. The underside 31 of mould 30 is provided with a one-sided slope and a protrusion 32, for instance for a drain. The upper side 33 of mould 30 is provided with a four-sided slope which runs to a central protrusion 34.

With this double-sided mould 30 it is still possible to decide on site whether a one-sided or a four-sided slope is required.

Figure 5 shows an exemplary method. This is very similar to the method according to figure 1. Mould 40 is however provided with adjusting feet 41 and attached to base surface 42 on only one side. Mould 40 is made of a relatively light material, whereby it tends to float on cast floor 43.

However, because mould 40 is fixed on one side via the adjusting feet, mould 40 will begin to incline of its own accord when cast floor 43 flows under mould 40. The advantage is that the slope formed by mould 40 will always connect to the horizontal part of the cast floor.

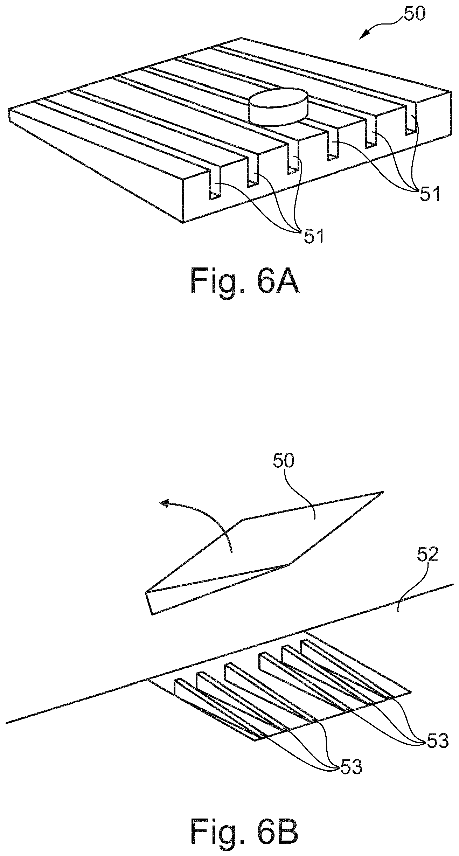

Figures 6A and 6B show an exemplary method. Mould 50 is provided on the underside with a number of grooves 51. The possible buoyancy of mould 50 is hereby reduced, whereby mould 50 remains lying in the cast floor more easily.

After curing of cast floor 52 the mould 50 can be removed, and thin ribs 53 will have been formed on the slope part in cast floor 52. These ribs 53 can be easily broken away, after which the cast floor can be further finished.

The figures serve only to illustrate the examples and the invention and determined dimensions and angles have been exaggerated so that the invention as defined in claim 1 can be elucidated more easily.

## Claims

1. Method for arranging a slope in a self-levelling cast floor, the method comprising the steps of:
- providing a mould with a shaped surface corresponding to the slope;
- pouring the self-levelling cast floor on a base surface;
- arranging the mould with the shaped surface at a distance from the base surface before or after pouring of the cast floor; and
- removing the mould after curing of the cast floor
wherein the mould is provided with a coupling piece for coupling to a draining opening, such as a siphon, arranged on the base surface.

2. Method as claimed in claim 1, wherein the mould is arranged by pressing the mould with the shaped surface into the poured and still liquid cast floor.

3. Method as claimed in claim 1 or 2, wherein the shaped surface of the mould is provided with a number of grooves, and wherein the method further comprises the step of:
- breaking away the ribs formed by the grooves following removal of the mould.

4. Method as claimed in claim 3, wherein the shaped surface is manufactured from a flexible plastic.

## Patentansprüche

1. Verfahren zum Anordnen eines Gefälles in einem selbstnivellierenden Gussboden, wobei das Verfahren die Schritte umfasst eines:
- Bereitstellens einer Form mit einer geformten Oberfläche, die dem Gefälle entspricht;
- Ausgießens des selbstnivellierenden Gussbodens auf eine Basisoberfläche;
- Anordnens der Form mit der geformten Oberfläche in einem Abstand von der Basisoberfläche vor oder nach einem Ausgießen des Gussbodens; und
- Entfernens der Form nach einem Aushärten des Gussbodens
wobei die Form mit einem Kopplungsteil zum Koppeln mit einer Ablauföffnung, wie etwa ein Siphon, angeordnet auf der Basisoberfläche, bereitgestellt ist.

2. Verfahren nach Anspruch 1, wobei die Form durch Pressen der Form mit der geformten Oberfläche in den ausgegossenen und noch flüssigen Gussboden angeordnet wird.

3. Verfahren nach Anspruch 1 oder 2, wobei die geformte Oberfläche der Form mit einer Anzahl von Kerben bereitgestellt wird, und wobei das Verfahren weiter den Schritt umfasst eines:
- Abbrechens der Rippen, gebildet durch die Kerben, im Anschluss an ein Entfernen der Form.

4. Verfahren nach Anspruch 3, wobei die geformte Oberfläche aus einem flexiblen Kunststoff hergestellt ist.

## Revendications

1. Procédé d'agencement d'une pente dans un sol coulé auto-nivelant, le procédé comprenant les étapes de :
- la dotation d'un moule d'une surface formée correspondant à la pente ;
- le versement du sol coulé auto-nivelant sur une surface de base ;
- l'agencement du moule avec la surface formée à une distance de la surface de base avant ou après le versement du sol coulé ; et
- le retrait du moule après le durcissement du sol coulé ;
dans lequel le moule est doté d'une pièce de couplage pour le couplage avec une ouverture de drainage, tel qu'un siphon, agencé sur la surface de base.

2. Procédé selon la revendication 1, dans lequel le moule est agencé par pressage du moule avec la surface formée dans le sol coulé versé et toujours liquide.

3. Procédé selon la revendication 1 ou 2, dans lequel la surface formée du moule est dotée d'un nombre de rainures, et dans lequel le procédé comprend en outre l'étape de :
- la rupture des nervures formées par les rainures suivant le retrait du moule.

4. Procédé selon la revendication 3, dans lequel la surface formée est fabriquée à partir d'une matière plastique flexible.
